# EUROPÄISCHE PATENTSCHRIFT

(11) **EP 0 947 802 B1**
(45) Veröffentlichungstag und Bekanntmachung des Hinweises auf die Patenterteilung: **07.09.2005**
(21) Anmeldenummer: 99105628.4
(22) Anmeldetag: 19.03.1999
(51) Int. Cl.: G01B 11/12, G01B 11/24

(54) **Messanordnung zur Erfassung von Dimensionen von Prüflingen, vorzugsweise von Hohlkörpern, insbesondere von Bohrungen in Werkstücken, sowie Verfahren zur Messung solcher Dimensionen**
Measurement arrangement for test pieces dimensions detection,preferably hollow bodies,in particular for bores in workpieces,as well as measurement method for such dimensions
Dispositif de détection des dimensions de pièces d' essai,de préférence de corps creux,en particulier des alésages dans des pièces à usiner,ainsi que procédé de mesure de telles dimensions

(30) Priorität: 04.04.1998 DE 19815201
(43) Veröffentlichungstag der Anmeldung: 06.10.1999
(73) Patentinhaber: Joh. & Ernst Link GmbH & Co. KG, D-70565 Stuttgart (DE)
(72) Erfinder: Link, Hans-Jörg, 70563 Stuttgart (DE)
(74) Vertreter: Kohl, Karl-Heinz

(56) Entgegenhaltungen:
- EP-A- 0 551 955
- WO-A-96/12160
- US-A- 4 656 508
- US-A- 4 958 932

## Beschreibung

Die Erfindung betrifft eine Meßanordnung nach dem Oberbegriff des Anspruches 1 sowie ein Verfahren unter Verwendung einer solchen Meßanordnung nach dem Oberbegriff des Anspruches 8.

Bei der Bearbeitung beispielsweise von Werkstücken ist es in der Regel notwendig, daß die Bearbeitungsgenauigkeit bestimmten Anforderungen entspricht. So muß beispielsweise eine Bohrung kreisförmigen Querschnitt haben und darf keinen unrunden Querschnitt aufweisen. Um die Bearbeitungsqualität zu überprüfen, werden die Werkstücke nach der Bearbeitung manuell oder in Prüfstationen auf die geforderte Bearbeitungsqualität hin überprüft. Stellt sich ein Bearbeitungsfehler heraus, muß das Werkstück entweder neu bearbeitet werden, oder es ist Ausschuß. Eine Nachbearbeitung des Werkstückes erfordert zusätzliche Bearbeitungszeit.

Der Erfindung liegt die Aufgabe zugrunde, die gattungsgemäße Meßanordnung und das gattungsgemäße Verfahren so auszubilden, daß die Dimensionen der Prüflinge hochgenau und zuverlässig erfaßt werden können.

Diese Aufgabe wird bei der gattungsgemäßen Meßanordnung erfindungsgemäß mit den kennzeichnenden Merkmalen des Anspruches 1 und beim gattungsgemäßen Verfahren erfindungsgemäß mit den kennzeichnenden Merkmalen des Anspruches 8 gelöst.

Bei der erfindungsgemäßen Meßanordnung und beim erfindungsgemäßen Verfahren werden auf die zu messende Oberfläche des Prüflings mit der Endoskopeinrichtung zwei Linienmuster einander so überlappend projiziert, daß ein Moiré-Muster auf der Oberfläche gebildet wird. Dieses Moiré-Muster kann mit der Kamera erfaßt werden. Das Moiré-Muster läßt sich auswerten. Aus dem Auswerteergebnis lassen sich die zu messenden Dimensionen am Prüfling einfach und dennoch hochgenau ermitteln.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in schematischer Darstellung eine in einem Werkzeug angeordnete erfindungsgemäße Meßanordnung,
- Fig. 2: in vergrößerter Darstellung und im Axialschnitt das Werkzeug mit der erfindungsgemäßen Meßanordnung,
- Fig. 3: in schematischer Darstellung das Meßprinzip bei Einsatz der erfindungsgemäßen Meßanordnung,
- Fig. 4: in einer Darstellung entsprechend Fig. 3 verschiedene Möglichkeiten bei Durchführung des Meßverfahrens unter Verwendung der erfindungsgemäßen Meßanordnung,
- Fig. 5: in schematischer Darstellung verschiedene Beispiele für die Durchführung des Meßverfahrens unter Verwendung von zwei Masken.

Mit der Meßanordnung können Dimensionen von Hohlkörpern, vorzugsweise von Bohrungen in Werkstücken, einfach und dennoch genau erfaßt werden. Beispielsweise kann mit der Meßanordnung der Durchmesser einer Bohrung im Werkstück einfach und genau ermittelt werden. Es ist hierbei möglich, diese Messung bereits während der Bearbeitung durch ein Werkzeug vorzunehmen und aufgrund der Messung das Werkzeug und/oder das zu bearbeitende Werkstück online bis zum Sollergebnis nachzuführen. Zwischen den einzelnen Bearbeitungs- und Meßzyklen am Werkstück ist kein Verfahren des Werkzeuges und/oder des Werkstückes und ein Wechseln notwendig. Vielmehr wird das Arbeitsergebnis, beispielsweise die Rundheit einer Bohrung oder deren Durchmesser, vorzugsweise unmittelbar während der Bearbeitung gemessen und ausgewertet. Dadurch können Bearbeitungsfehler sofort erkannt und korrigiert werden. Das fertig bearbeitete Werkstück bedarf keiner weiteren Überprüfung mehr. Da eine Korrektur während der Bearbeitung durchgeführt werden kann, ergeben sich sehr kurze Bearbeitungszeiten und vor allem hervorragende Ergebnisqualitäten. Auch die Werkzeuglebensdauer wird erhöht, da infolge der Online-Messung und -Auswertung während der Bearbeitung das Werkzeug optimal lange zur Bearbeitung verwendet werden kann.

Es ist auch möglich, mit dem Werkzeug die Bearbeitung am Werkstück durchzuführen und unmittelbar anschließend das Bearbeitungsergebnis zu messen und auszuwerten. Entspricht das Bearbeitungsergebnis nicht den gewünschten Anforderungen, wird unmittelbar anschließend das Werkzeug und/oder das Werkstück im erforderlichen Maße korrigiert und eine Nachbearbeitung durchgeführt.

Anhand der Zeichnungen wird die Variante beschrieben, bei der die Messung des Arbeitsergebnisses bereits während der Bearbeitung vorgenommen wird.

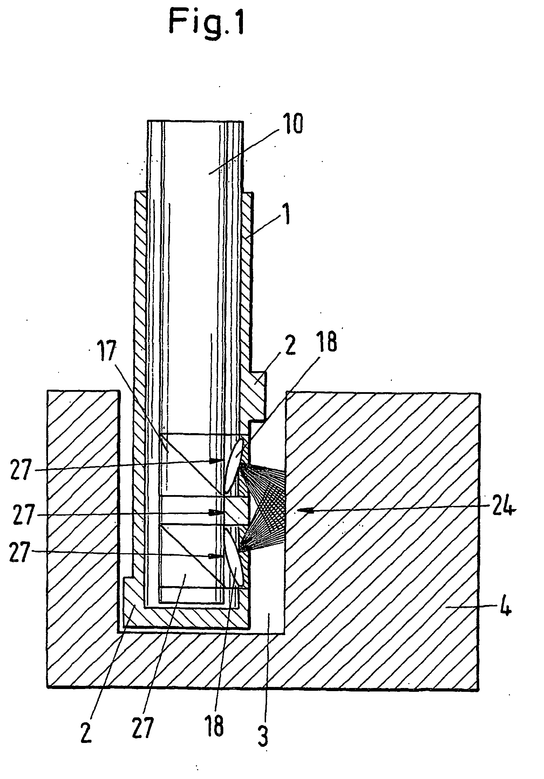

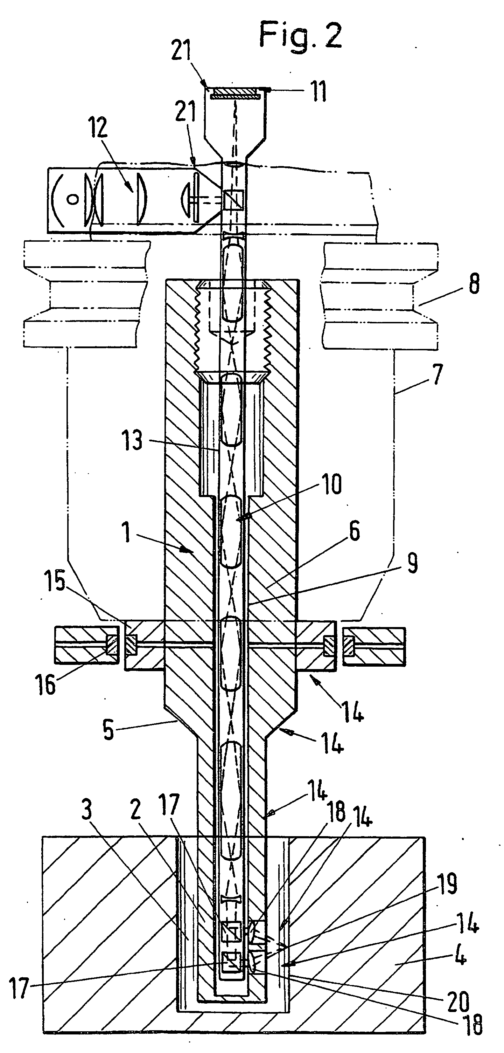

Die Fig. 1 und 2 zeigen schematisch ein Werkzeug 1, das ein Fräser, ein Bohrer und dergleichen sein kann. Das Werkzeug 1 hat einen Arbeitsteil 2, mit dem eine Bohrung 3 in einem Werkstück 4 hergestellt und/oder bearbeitet wird. Der Arbeitsteil 2 geht über einen Konusteil 5 in einen Einspannschaft 6 über, mit dem das Werkzeug 1 in einer Werkzeugaufnahme 7 in bekannter Weise gehalten ist. Die Werkzeugaufnahme 7 ist in Fig. 2 mit strichpunktierten Linien angedeutet und hat eine Greifernut 8, in die ein Greifer eines Handhabungsgerätes, wie beispielsweise eines Werkzeugwechslers, in bekannter Weise eingreifen kann. Die Werkzeugaufnahme 7 wird in eine Spindeleinheit einer Bearbeitungsmaschine eingesetzt und in bekannter Weise drehbar angetrieben.

Der Konus 5 des Werkzeuges 1 verjüngt sich in Richtung auf den Arbeitsteil 2 und liegt mit axialem Abstand sowohl zur Werkzeugaufnahme 7 als auch zum Werkstück 4, das mit dem Werkzeug 1 bearbeitet wird.

Das Werkzeug 1 hat eine zentrale axiale Bohrung 9, in der eine Endoskopoptik 10 untergebracht ist. Die Bohrung 9 erstreckt sich über die gesamte Länge des Werkzeuges 1 und ist am arbeitsteilseitigen Ende geschlossen, so daß die bei der Bearbeitung des Werkstückes 4 anfallenden Späne und dergleichen nicht an die Endoskopoptik 10 gelangen können. Die Endoskopoptik 10 erstreckt sich durch die Werkzeugaufnahme 7 bis zu einem Kamerakopf 11, der feststehend, aber auch mitbewegt sein kann. Innerhalb der Werkzeugaufnahme 7 befindet sich eine Beleuchtungseinheit 12 mit Markenpojektor, mit der in bekannter Weise das für die Endoskopoptik 10 erforderliche Licht erzeugt wird.

Nach den Erfordernissen der mechanischen Ausführung kann die aus dem Kamerakopf 11 und dem Markenprojektor 12 (Beleuchtungseinheit) bestehende Optik durch bekannte optische Verfahren gefaltet ausgeführt werden.

Die Endoskopoptik 10 hat ein dünnes Rohr 13, das durch die zentrale Bohrung 9 des Werkzeuges 1 verläuft und das mit einem Linsensystem oder einer Glasfaseroptik versehen ist. Das Werkzeug 1 weist mindestens eine Ausblicköffnung 14 auf, durch welche die Endoskopoptik 10 den Bearbeitungsbereich des Werkzeuges einsehen kann. In Fig. 2 ist durch Pfeile angedeutet, daß die Ausblicköffnung 14 an unterschiedlichen Stellen des Werkzeuges 1 vorgesehen sein kann. Die Lage der Ausblicköffnung 14 richtet sich danach, welche Bearbeitung am Werkstück 4 durchgeführt und/oder welcher Werkstückbereich während der Bearbeitung überwacht werden soll. Selbstverständlich ist es auch möglich, zwei oder mehr Ausblicköffnungen 14 an unterschiedlichen Stellen des Werkzeuges 1 vorzusehen. Die Endoskopoptik 10 wird so angeordnet, daß die Beobachtung des Bearbeitungsergebnisses durch das jeweilige Ausblickfenster 14 möglich ist. Hierfür ist die Endoskopeinrichtung 10 mit einem Beobachtungsteil 27 versehen (Fig. 1), der hinter der Ausblicköffnung 14 angeordnet und mit dem Kamerakopf 11 verbunden ist. Hat das Werkzeug 1 zwei oder mehr Ausblicköffnungen 14 an unterschiedlichen Stellen, ist es vorteilhaft, wenn das Rohr 13 der Endoskopoptik 10 verschiebbar in der Bohrung 9 des Werkzeuges 1 untergebracht ist, damit das Beobachtungsteil 27 hinter die entsprechende Ausblicköffnung 14 gelangt.

Durch die Bohrung 9 kann Kühlmittel während der Bearbeitung des Werkstückes 4 in bekannter Weise hindurchgeführt werden. Die Endoskopoptik 10 ist in diesem Falle in eine Kapselung eingebettet.

Die elektronische Signalübertragung von der Endoskopoptik erfolgt über zwei Übertragungsringe 15 und 16. Der Übertragungsring 15 sitzt auf dem Einspannschaft 6 des Werkzeuges 1, der mit geringem Abstand vom Übertragungsring 16 umgeben ist. Die beiden Übertragungsringe 15, 16 bilden Kontakte bzw. Sender/Empfänger für eine elektronische Energie- und Signalübertragung. Die vom Kamerakopf 11 kommenden Signale werden über diese Schnittstelle nach außen zu einem (nicht dargestellten) Rechner übertragen.

Die Beleuchtungseinheit 12 kann auch außerhalb der Werkzeugaufnahme 7, beispielsweise im freien Arbeitsraum, angeordnet sein. Auch der Markenprojektor kann sich im freien Arbeitsraum befinden. Am freien Ende des Rohres 13 sind in Höhe der Ausblicköffnung 14 zwei axial hintereinander angeordnete Strahlteiler 17 vorgesehen. Ihnen sind gekippte Linsen 18 nachgeordnet, die außerhalb des Rohres 13 innerhalb der Ausblicköffnung 14 angeordnet sind. Die beiden Linsen 18, die auch innerhalb des Rohres 13 der Endoskopoptik 10 angeordnet sein können, sind so geneigt, daß das durch sie hindurchtretende Licht auf einen gemeinsamen Bereich 19 auf der Innenwand 20 der Bohrung 9 des Werkstückes 4 trifft (Fig. 2). Über die Ausblicköffnung 14 kann im dargestellten Ausführungsbeispiel die untere Hälfte der Sacklochbohrung 9 des Werkstückes 4 während der Bearbeitung beobachtet und erfaßt werden. Je nach Lage der Ausblicköffnung 14 können verschiedene Bereiche der Bohrung 9 erfaßt werden, auch deren Boden.

Die vom Beobachtungsteil 27 erfaßten Werkstückbereiche werden zum Kamerakopf 11 in Form von Lichtsignalen übertragen. Er kann mit einem Polarisations- oder Farbfilter 21 versehen sein. Auch die Beleuchtungseinheit 12 kann mit einem solchen Polarisations- oder Farbfilter 21 ausgestattet sein. Der Kamerakopf 11 kann in bekannter Weise ausgebildet sein. Von ihm werden die Signale entsprechend ausgewertet und verarbeitet.

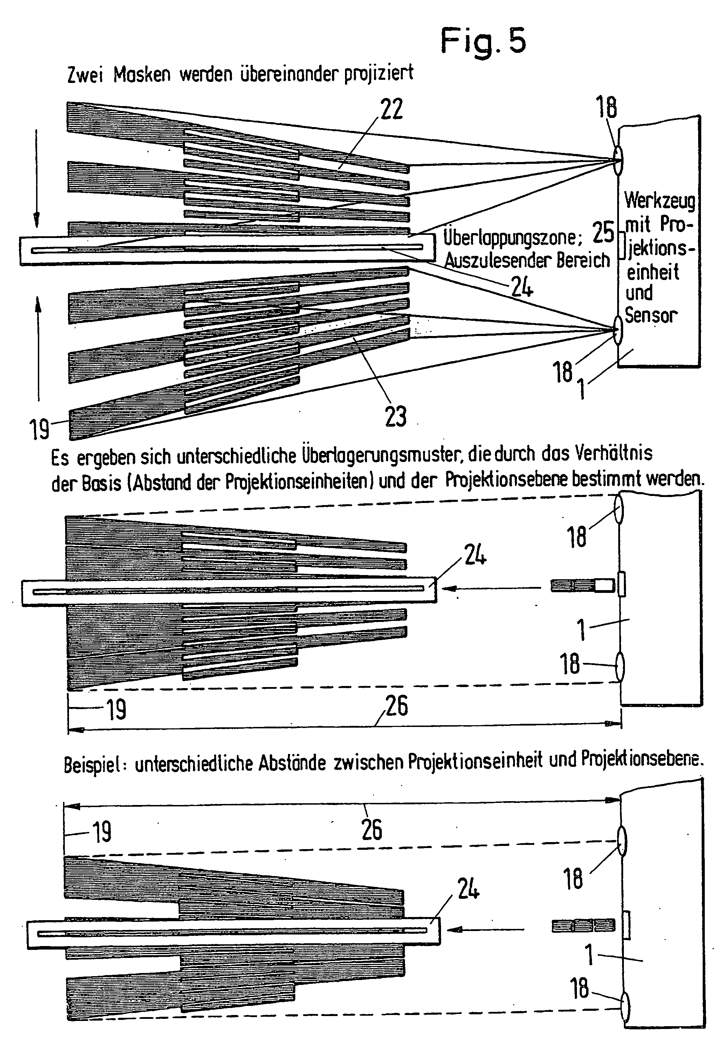

Mit der beschriebenen Ausbildung wird beispielsweise der Durchmesser der Bohrung 9 des Werkstückes 4 gemessen. Hierzu werden durch die Endoskopoptik 10 auf die Innenwand 20 der Bohrung 9 im Oberflächenbereich 19 zwei gleiche Linienmuster 22 (Fig. 5) projiziert. Im Oberflächenbereich 19 wird dabei ein Moiré-Muster 24 (Fig. 1 und 5) gebildet, das mit dem Beobachtungsteil 27 beobachtet wird. Je nach Ausbildung des Moiré-Musters 24 können Aussagen über den Oberflächenbereich 19 gemacht werden. Die beiden Linienmuster 22, 23, die identisch sind, werden in bekannter Weise von außen über die Endoskopoptik 10 auf den Oberflächenbereich 19 projiziert.

In Fig. 5 sind beispielhaft drei unterschiedliche Überlagerungsmuster 24 dargestellt, die durch das Verhältnis der Basis 25 (Abstand der Linsen 18 voneinander) und deren Abstand 26 zur Projektionsebene (Oberflächenbereich 19) bestimmt werden. Bei allen drei Ausführungsformen ist die Basis 25 gleich. Der senkrechte Abstand 26 zwischen den Linsen 18 und der Projektionsebene 19 ist im oberen Ausführungsbeispiel am kleinsten. Daraus ergibt sich ein bestimmtes Moiré-Muster 24.

Beim mittleren Ausführungsbeispiel in Fig. 5 ist der Abstand 26 größer als bei der oberen Ausführungsform. Dementsprechend ergibt sich auch ein anderes Moiré-Muster 24 als beim oberen Ausführungsbeispiel.

Beim unteren Ausführungsbeispiel in Fig. 5 ist der Abstand 26 am größten. Dementsprechend ergibt sich wieder ein anderes Moiré-Muster 24.

Die drei Ausführungsbeispiele zeigen, daß durch die Form des Moire-Musters 24 eine Aussage über den Abstand zwischen dem Werkzeug 1 und der Innenwand 20 der Bohrung 9 getroffen werden kann. Dieser Abstand 26 ist somit auch ein Maß für den Radius bzw. den Durchmesser der Bohrung 9. Auf diese Weise läßt sich einfach und dennoch hochgenau mittels des Moiré-Musters 24 feststellen, ob der Bohrungsradius bzw. -durchmesser dem Sollwert entspricht.

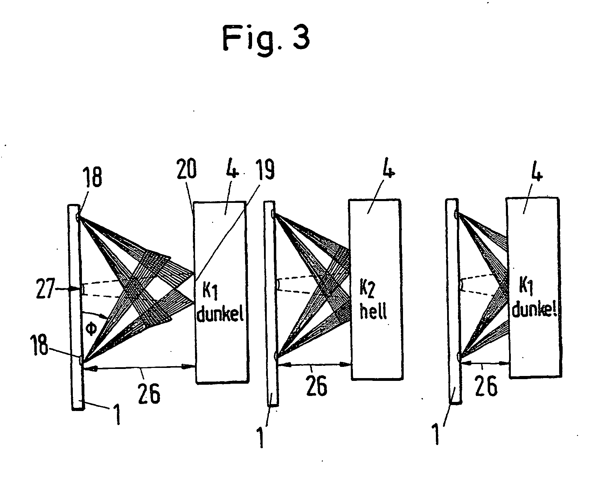

Anhand von Fig. 3 wird allgemein das Meßprinzip mittels des Überlagerungsmusters 24 beschrieben. Die Linienmuster 22, 23 (Fig. 5) enthalten mikroskopische Linien, die durch die Moiré-Anordnung in makroskopische, leicht erkennbare Strukturen umgesetzt werden. Fig. 3 zeigt allgemein eine Projektionseinheit, die beim beschriebenen Ausführungsbeispiel durch das Werkzeug 1 mit der Endoskopoptik 10 gebildet wird. Durch die beiden Linsen 18 werden die beiden Linienmuster 22, 23 auf die Oberfläche 20 des zu prüfenden Objektes 4, im beschriebenen Ausführungsbeispiel der Innenwand der Bohrung des Werkstückes, projiziert. Das Beobachtungsteil 27 befindet sich mittig zwischen den beiden Linsen 18. Mit dem Beobachtungsteil 27 wird der Oberflächenbereich 19 erfaßt, auf dem sich das Moire-Muster 24 durch Überlagerung der Linienmuster 22, 23 bildet. Der Abstand zwischen der Projektionseinheit 1 und dem Objekt 4 ist mit 26 bezeichnet und ist bei dem linken Ausführungsbeispiel in Fig. 3 am größten. Aufgrund der Überlagerung der Linienmuster ergeben sich Hell-Dunkel-Folgen, wobei der helle Bereich mit K2 und der dunkle Bereich mit K1 bezeichnet sind. Die Auflösung hängt von dem minimal erreichbaren Abstand Δt der Hell(K2)-Dunkel(K1)-Folgen in Abstandsrichtung 26 ab.

Beim mittleren Ausführungsbeispiel der Fig. 3 ist der Abstand 26 kleiner als beim linken Ausführungsbeispiel. Dementsprechend ergibt sich eine andere Hell-Dunkel-Folge, die zu einem anderen Moire-Muster führt.

Beim rechten Ausführungsbeispiel in Fig. 3 ist der Abstand 26 am kleinsten. Dementsprechend ergibt sich wiederum eine andere Hell-Dunkel-Folge und damit auch ein anderes Moiré-Muster.

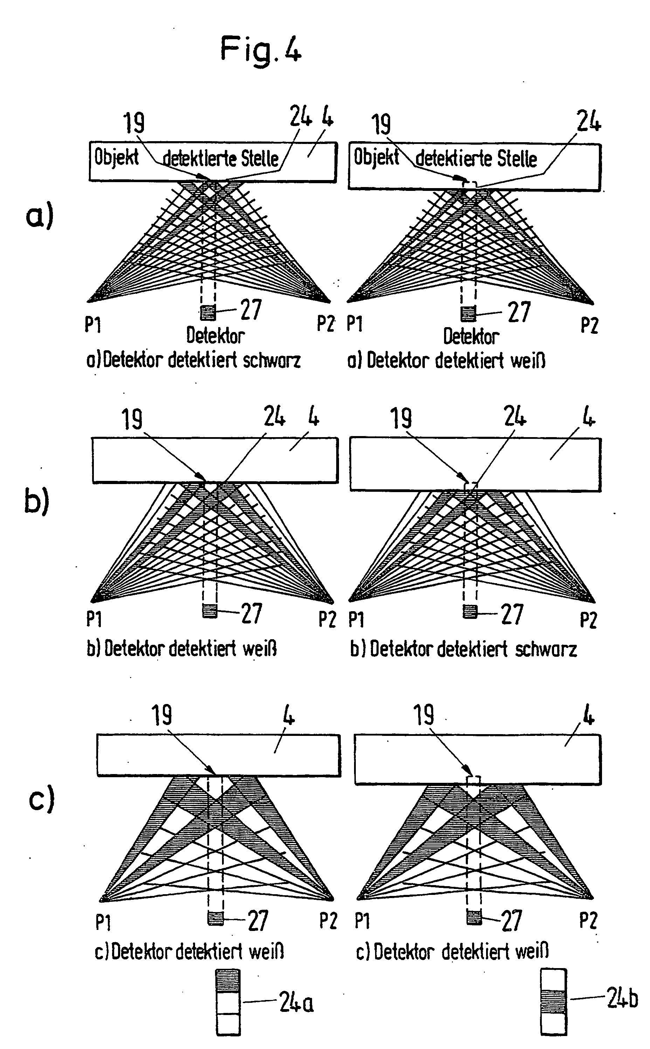

Aus Fig. 4 ergibt sich, daß eine Codierung und eine Abstandserkennung durch unterschiedliche Linienfrequenzen in den Linienmustern 22 und 23 möglich ist. Beim oberen Ausführungsbeispiel der Fig. 4 ist. eine sehr hohe Linienfrequenz vorgesehen. Im Überlagerungsbereich 24 ergibt sich durch den Moiré-Effekt jedoch eine Abbildung auf eine niedrige Ortsfrequenz. Die sich mit dem Abstand zwischen Objekt 4 zum Beobachtungsteil 27 (Fig. 4a, rechte und linke Abbildung) schnell und periodisch wechselnde Amplitude im Meßfeld 19 ist ein nicht eineindeutiges Maß für den Abstand. Da sich die Periodizität der Amplituden im Meßfeld 19 und die Linienfrequenz im gleichen Maß ändert (Fig. 4, Vergleich Sequenz a)-c), links oder rechts), kann durch sukzessive Verringerung der Linienfrequenzen bis zum doppelten Abstand zwischen Objekt 19 zu Beobachtungsteil 27 die Eineindeutigkeit erreicht werden.

Wiederum zeigt sich die Abhängigkeit des Moiré-Musters vom Abstand zwischen dem Beobachtungsteil 27 und dem Objekt 4. In der linken Darstellung detektiert das Beobachtungsteil 27 weiß und in der rechten Abbildung schwarz.

Bei der in Fig. 4 unten dargestellten Ausführungsform haben die Linienmuster 22, 23 nur eine sehr geringe Linienfrequenz, so daß das durch Überlagerung der Linienmuster 22, 23 entstehende Moire-Muster 24 eine geringe Linienfrequenz hat. Je nach Abstand zwischen dem Beobachtungsteil 27 und dem Objekt 4 erfaßt das Beobachtungsteil 27 in der linken Anordnung (großer Abstand) im Meßbereich 19 weiß und bei der rechten Anordnung (kleiner Abstand) ebenfalls weiß.

Werden die unterschiedlichen Linienfrequenzen gemäß Fig. 4 gleichzeitig projiziert, ist eine direkte binäre Codierung des Abstandsmaßes möglich. Je nach Abstand zwischen dem Beobachtungsteil 27 und dem Objekt 4 ergeben sich bei der gleichzeitigen Projizierung unterschiedlicher Linienfrequenzen unterschiedliche Moiré-Muster 24a, 24b.

Durch die Ausnutzung des Moiré-Musters 24, d.h. durch die Projektion der Linienmuster 22, 23 auf das zu messende Objekt 4 wird die Auflösung der Endoskopoptik 10 bis zur Auflösungsgrenze ausgenutzt. Dadurch lassen sich kleinste Dimensionen ohne Schwierigkeiten erfassen. So kann beispielsweise auch die Mikrorauhigkeit einer Oberfläche mit dem beschriebenen Verfahren erfaßt werden.

Die Meßanordnung muß nicht in einem Werkzeug angeordnet sein, sondern kann auch gesondert vom Werkzeug als selbständige Meßeinheit verwendet werden. So ist es beispielsweise möglich, nach der Bearbeitung des Werkstückes 4 mit dem Werkzeug 1 die gesonderte Meßeinheit nach dem Herausziehen des Werkzeuges anschließend in die Bohrung 9 einzufahren und die erforderlichen Messungen vorzunehmen. Das zu messende Objekt muß nicht ein Werkstück sein, sondern kann jeder geeignete Prüfling sein, an dem Messungen vorgenommen werden sollen. Insbesondere können mit der Meßanordnung Dimensionen von Hohlkörpern erfaßt werden. Sollte die Oberfläche des Prüflings reflektieren, werden vorteilhaft die Polarisationsfilter 21 am Kamerakopf 11 sowie an der Beleuchtungseinheit 12 vorgesehen, um den Kontrast des projizierten Moiré-Musters 24 zu verbessern. Die Polarisationsfilter 21 am Kamerakopf 11 und an der Beleuchtungseinheit 12 sind in gekreuzter Stellung zueinander angeordnet. Anstelle der Polarisationsfilter 21 können auch farbselektierende Methoden bei reflektierenden Oberflächen der Prüflinge 4 angewendet werden. So können anstelle der Polarisationsfilter 21 auch Farbfilter am Kamerakopf 11 und an der Beleuchtungseinheit 12 eingesetzt werden. Die Strahlteiler 17 der Endoskopoptik 10 sind entsprechend selektiv ausgebildet.

Um den Anteil des an der Oberfläche 20 des Objektes 4 gebeugten Lichtes zu erhöhen, können die Werkzeuge 1 Strukturen oder Beschichtungen zur Erhöhung der Mikrorauhigkeit tragen. Ebenso ist es möglich, Bearbeitungsemulsionen zur Erhöhung der Mikrorauhigkeit einzusetzen.

Auf die Oberfläche 20 des Objektes 4 können fluoreszierende Farbstoffe aufgetragen werden, um eine Kontraststeigerung bei der Bildung des Moiré-Musters 24 zu erzielen. Die aufgetragenen fluoreszierenden Farbstoffe können aber auch zur Separation zwischen Projektionsstrahlengang und Bildstrahlengang der Endoskopoptik 10 dienen.

Eine besonders vorteilhafte Ausbildung besteht darin, die Endoskopptik 10 in der beschriebenen Weise im Werkzeug 1 unterzubringen. Dann laufen der Bearbeitungs- und der Meßvorgang ohne einen Werkzeugaustausch ab.

Es ist grundsätzlich auch möglich, beispielsweise durch zwei an unterschiedlichen Stellen des Werkzeuges 1 vorgesehene Ausblicköffnungen gleichzeitig unterschiedliche Bearbeitungsbereiche am Werkstück 4 mit der Endoskopoptik zu beobachten. Um die entsprechenden Informationen optisch zuordnen zu können, kann beispielsweise das Licht polarisiert werden. In diesem Fall können durch unterschiedliche Polarisation die Signale der jeweiligen Ausblicköffnung 14 zugeordnet werden. Eine weitere Möglichkeit der Zuordnung wäre die Verwendung von Farblicht mit einem zugehörigen selektiven Strahlteiler. Durch die Farbunterscheidung können die übersandten Signale ebenfalls der jeweiligen Ausblicköffnung 14 zugeordnet werden.

Als Werkzeuge können Fräswerkzeuge, Ausdrehwerkzeuge, Drehmeißel, Schleifwerkzeuge und dergleichen mit der Endoskopoptik ausgerüstet werden. Mit solchen Werkzeugen ist dann eine Online-Vermessung sowie eine Online-Korrektur möglich. Bereits während der Bearbeitung des Werkstückes 4 durch das Werkzeug 1 kann das Bearbeitungsergebnis erfaßt und mit vorgegebenen Soll-Werten verglichen werden. Je nach Ergebnis des Soll-Ist-Vergleiches kann noch während der Bearbeitung eine Korrektur vorgenommen werden.

## Patentansprüche

1. Meßanordnung zur Erfassung von Dimensionen von Prüflingen, vorzugsweise von Hohlkörpern, insbesondere von Bohrungen in Werkstücken,
**dadurch gekennzeichnet, daß** die Meßanordnung eine Endoskopeinrichtung (10) aufweist, mit der aus zwei Austrittsaperturen das gleiche Linienmuster (22, 23) zur Bildung eines Moire-Musters (24) auf die Oberfläche (20) des Prüflings (4) projizierbar ist, und daß das Moiré-Muster (24) mit mindestens einer Kamera (11) erfaßbar ist.

2. Meßanordnung nach Anspruch 1,
**dadurch gekennzeichnet, daß** die Endoskopeinrichtung (10) vorzugsweise in einer axialen Aufnahme (9) des Werkzeuges (1) untergebracht ist.

3. Meßanordnung nach Anspruch 1 oder 2,
**dadurch gekennzeichnet, daß** die Endoskopeinrichtung (10) ein Rohr (13) aufweist, das am freien Ende mit mindestens zwei Austrittsöffnungen (14) versehen ist, hinter denen vorteilhaft mindestens ein Beobachtungsteil (27) liegt.

4. Meßanordnung nach Anspruch 3,
**dadurch gekennzeichnet, daß** vor den Austrittsöffnungen (14) jeweils ein gekipptes Linsenelement (18) angeordnet ist, die vorzugsweise so gekippt sind, daß die durch sie gehenden Projektionsstrahlen der Endoskopeinrichtung (10) an der Oberfläche (20) des Prüflings (4) das Moiré-Muster (24) bilden.

5. Meßanordnung nach einem der Ansprüche 1 bis 4,
**dadurch gekennzeichnet, daß** die Kamera (11) mit einem Polarisationsfilter (21) versehen ist.

6. Meßanordnung nach einem der Ansprüche 1 bis 5,
**dadurch gekennzeichnet, daß** die Endoskopeinrichtung (10) eine Beleuchtungseinheit (12) aufweist, die mit einem Markenprojektor und/oder mit einem Polarisationsfilter (21) versehen ist.

7. Meßanordnung nach einem der Ansprüche 1 bis 6,
**dadurch gekennzeichnet, daß** zur Verbesserung des Kontrastes des projizierten Moiré-Musters (24) farbselektierende Elemente, wie Farbfilter, selektive Strahlteiler und dergleichen, vorgesehen sind.

8. Verfahren zur Messung der Dimensionen von Prüflingen unter Verwendung der Meßanordnung nach einem der Ansprüche 1 bis 7,
**dadurch gekennzeichnet, daß** auf der Oberfläche (20) des Prüflings (4) ein Moiré-Muster (24) erzeugt wird, das erfaßt und ausgewertet wird.

9. Verfahren nach Anspruch 8,
**dadurch gekennzeichnet, daß** zur Erzeugung des Moiré-Musters (24) zwei gleiche Linienmuster (22, 23) verwendet werden, und daß vorteilhaft gleichzeitig unterschiedliche Linienfrequenzen zur Erzeugung des Moiré-Musters (24) auf die Oberfläche (20) des Prüflings (4) projiziert werden.

10. Verfahren nach Anspruch 8 oder 9,
**dadurch gekennzeichnet, daß** den Prüfling (4) bearbeitende Werkzeuge (1) Strukturen oder Beschichtungen aufweisen, die durch Erzeugung einer erhöhten Mikrorauhigkeit auf dem Prüfling (4) die Auslesung des Meßwertes erleichtern.

11. Verfahren nach einem der Ansprüche 8 bis 10,
**dadurch gekennzeichnet, daß** Bearbeitungsemulsionen zur Erhöhung der Mikrorauhigkeit der zu messenden, vorteilhaft mit fluoreszierenden Farbstoffen versehenen Oberfläche (20) des Prüflings (4) verwendet werden.

12. Verfahren nach einem der Ansprüche 8 bis 11,
**dadurch gekennzeichnet, daß** zur Erhöhung der Auflösung ein sinusförmig intensitätsmoduliertes Gitter als Hilfe bei der Phasenbestimmung verwendet wird.

## Claims

1. Measurement arrangement for dimension detection of test pieces, preferably hollow bodies, in particular for bores in work pieces,
**characterised in that** the measurement arrangement comprises an endoscope device (10) with which out of two escape apertures the same line pattern (22, 23) for the formation of a moiré pattern (24) can be projected onto the surface (20) of the test piece (4) and that the moiré pattern (24) can be registered with at least one camera (11).

2. Measurement arrangement according to claim 1,
**characterised in that** the endoscope device (10) is preferably accommodated within an axial location (9) of the tool (1).

3. Measurement arrangement according to claim 1 or 2,
**characterised in that** the endoscope device (10) comprises a tube (13), which is provided at the free end with at least two outlet openings (14), behind which is situated at least one observation element (27).

4. Measurement arrangement according to claim 3,
**characterised in that** prior to the outlet openings (14) is disposed respectively a tilted lens element (18) these are preferably tilted so that the projection rays of the endoscope device (10) penetrating them form the moiré pattern (24) at the surface (20) of the test piece (4).

5. Measurement arrangement according to one of claims 1 to 4,
**characterised in that** the camera (11) is provided with a polarization filter (21).

6. Measurement arrangement according to one of claims 1 to 5,
**characterised in that** the endoscope device (10) comprises a lightening unit (12) which is provided with a mark projector and/or a polarization filter (21).

7. Measurement arrangement according to one of claims 1 to 6,
**characterised in that** for improvement of the contrast of the projected moiré pattern (24) colour selecting elements, like colour filters, selective ray dividers and the like are provided.

8. Method for the measurement of the dimensions of test pieces by using the measurement arrangement according to one of claims 1 to 7,
**characterised in that** on the surface (20) of the test piece (4) a moiré pattern (24) is generated, which is registered and evaluated.

9. Method according to claim 8,
**characterised in that** for the generation of the moiré pattern (24) two equal line patterns (22, 23) are used and that advantageously simultaneously different line frequencies are projected for the generation of the moire pattern (24) on the surface (20) of the test piece (4).

10. Method according to claim 8 or 9,
**characterised in that** tools (1) machining the test piece (4) comprise structures or coatings which facilitate the readout of the measurement value by the generation of an increased micro roughness on the test piece (4).

11. Method according to one of claims 8 to 10,
**characterised in that** machining emulsions are used for the increase of the micro roughness of the surface (20) of the test piece (4) to be measured, advantageously provided with fluorescent dyes.

12. Method according to one of the claims 8 to 11,
**characterised in that** for increasing the resolution, a sinusoidal, intensity-modulated grid is used to help determine the phase.

## Revendications

1. Dispositif de détection des dimensions de pièces d'essai, de préférence de corps creux, en particulier des alésages dans des pièces à usiner,
**caractérisé en ce que** le dispositif de détection comprend un dispositif d'endoscope (10), avec lequel la même figure de raies (22, 23) peut être projetée de deux ouvertures de sortie pour formation d'un dessin moiré (24) sur la surface (20) de la pièce d'essai (4) et que le dessin moiré (24) peut être saisi par au moins un appareil photographique (11).

2. Dispositif de détection selon revendication 1,
**caractérisé en ce que** le dispositif d'endoscope (10) est logé de préférence dans un logement axial (9) de l'outil (1).

3. Dispositif de détection selon revendication 1 ou 2,
**caractérisé en ce que** le dispositif d'endoscope (10) comprend un tube (13), lequel à son extrémité libre est muni d'au moins deux orifices de sortie (14), en arrière desquels est placée avantageusement au moins une pièce d'observation (27).

4. Dispositif de détection selon revendication 3,
**caractérisé en ce que** devant les orifices de sortie (14) est disposé respectivement un élément de lentille basculé (18); ces éléments sont basculés de préférence de telle façon que les raies de projection du dispositif d'endoscope (10) les traversant forment sur la surface (20) de la pièce d'essai (4) le dessin moiré (24).

5. Dispositif de détection selon une des revendications 1 à 4,
**caractérisé en ce que** l'appareil photographique (11) est muni d'un filtre de polarisation (21).

6. Dispositif de détection selon une des revendications 1 à 5,
**caractérisé en ce que** le dispositif d'endoscope (10) comprend une unité d'éclairage (12), laquelle est munie d'un projecteur de dessin et/ou d'un filtre de polarisation (21).

7. Dispositif de détection selon une des revendications 1 à 6,
**caractérisé en ce que** pour l'amélioration du contraste du dessin moiré (24) projeté des éléments de séparation chromatique comme filtres colorés, séparateurs de faisceaux sélectifs et des moyens semblables sont prévus.

8. Procédé de mesure des dimensions de pièces d'essai utilisant le dispositif de détection selon une des revendications 1 à 7,
**caractérisé en ce que** sur la surface (20) de la pièce d'essai (4) est généré un dessin moiré (24), lequel est saisi et évalué.

9. Procédé selon revendication 8,
**caractérisé en ce que** pour la formation du dessin moiré (24) sont utilisées deux mêmes figures de raies (22, 23) pareils et qu'avantageusement de façon simultanée des fréquences de raies différentes sont projetées pour la génération du dessin moiré (24) sur la surface (20) de la pièce d'essai (4).

10. Procédé selon revendication 8 ou 9,
**caractérisé en ce que** des outils (1) usinant la pièce d'essai (4) comprennent des structures ou des revêtements facilitant la lecture de la valeur mesurée par la création d'une microrugosité augmentée sur la pièce d'essai (4).

11. Procédé selon une des revendications 8 à 10,
**caractérisé en ce que** des émulsions d'usinage sont utilisées pour augmenter la microrugosité de la surface (20) à mesurer de la pièce d'essai (4), avantageusement pourvue de colorants fluorescents.

12. Procédé selon une des revendications 8 à 11,
**caractérisé en ce que** pour l'augmentation de la résolution une grille d'intensité modulée sinusoïdalement est utilisée comme aide à la determination de phase.
